Europäisches Patentamt

European Patent Office

Office européen des brevets

(19)

(11) **EP 0 813 695 B1**

(12) **FASCICULE DE BREVET EUROPEEN**

(45) Date de publication et mention
de la délivrance du brevet:
**08.03.2000 Bulletin 2000/10**

(21) Numéro de dépôt: **96925779.9**

(22) Date de dépôt: **12.07.1996**

(51) Int Cl.$^7$: **G02B 6/44**

(86) Numéro de dépôt international:
**PCT/FR96/01088**

(87) Numéro de publication internationale:
**WO 97/03375 (30.01.1997 Gazette 1997/06)**

(54) **CABLE COMPORTANT DES FIBRES OPTIQUES ENTOUREES PAR UNE GAINE EXTERNE**

FASEROPTISCHES KABEL MIT ÄUSSERER HÜLLE

CABLE COMPRISING OPTICAL FIBRES ENCLOSED IN AN OUTER SHEATH

(84) Etats contractants désignés:
**DE ES FR GB IT**

(30) Priorité: **13.07.1995 FR 9508535**

(43) Date de publication de la demande:
**29.12.1997 Bulletin 1997/52**

(73) Titulaire: **SAGEM SA**
**75783 Paris Cédex 16 (FR)**

(72) Inventeur: **JAMET, Patrick**
**F-77130 Marolles-sur-Seine (FR)**

(74) Mandataire: **Fruchard, Guy et al**
**CABINET BOETTCHER,**
**22, rue du Général Foy**
**75008 Paris (FR)**

(56) Documents cités:
**EP-A- 0 286 349      EP-A- 0 373 846**
**DE-A- 3 815 565**

## Description

La présente invention concerne un câble comportant des fibres optiques entourées par une gaine externe.

Dans l'industrie du câble il est bien connu que les fibres optiques ne doivent pas subir de contrainte mécanique si l'on veut à la fois ne pas dégrader leur performance en transmission et leur durée de vie.

Pour limiter les contraintes de traction sur les fibres optiques lors de la pose des câbles ou lors des variations de température qui entraînent une dilatation ou une rétraction des fibres optiques, il est connu d'utiliser des organes de renfort qui peuvent être des organes de renfort centraux ou périphériques. Dans le cas d'un organe de renfort central il est généralement nécessaire d'effectuer un câblage des fibres optiques ou des éléments renfermant des fibres optiques, ce qui ralentit la cadence de fabrication et augmente le coût du câble obtenu.

Pour éviter l'opération de câblage il est connu de réaliser un câble à fibres optiques en entourant un faisceau de fibres optiques par une gaine externe dans laquelle les organes de renfort sont noyés longitudinalement. Lorsqu'un câble de ce type est soumis à une courbure, les organes de renfort qui sont disposés à l'extérieur de la courbure par référence à la fibre moyenne du câble sont soumis à un allongement qui est d'autant plus important que le diamètre du câble est plus élevé. Il en résulte une résistance à la flexion du câble et un risque de rupture des organes de renfort si l'effort appliqué sur le câble est supérieur à un effort provoquant un allongement à la rupture des organes de renfort les plus extérieurs.

Pour éviter ce problème on a envisagé de disposer seulement deux organes de renfort diamétralement opposés, ou encore, selon le document DE-A-38 15565, de disposer des groupes d'organes de renforts diamétralement opposés, ces groupes comportant trois organes de renfort espacés les uns des autres ou quatre organes de renforts disposés dans un logement rempli d'un matériau à faible coefficient de friction pour permettre un déplacement relatif des organes de renfort et de la gaine. Toutefois dans le cas d'organes de renfort espacés les uns des autres il n'est pas possible de courber le câble autour d'un axe parallèle à la droite reliant les organes de renfort sans soumettre ceux-ci à un allongement différentiel risquant de provoquer leur rupture. En outre, dans le cas d'organes de renfort disposés dans un logement, la gaine externe ne participe pas à l'effort de traction et il est donc nécessaire de prévoir un plus grand nombre d'organes de renfort. Dans un cas comme dans l'autre la gaine dans laquelle les organes de renfort sont noyés doit elle-même avoir une épaisseur relativement importante. Ceci diminue donc la capacité de flexion et réduit la compacité du câble.

On connaît également des documents EP 286 349 et EP 373 846 un câble à fibres optiques comportant un élément tubulaire contenant les fibres optiques et entouré par un ruban anti-adhésif ou un tube métallique sur lequel sont disposés des organes de renforts recouverts par une gaine en matière diélectrique. Un tel câble est certes compact mais il a une flexibilité très faible qui en rend la manipulation malaisée.

Selon l'invention on propose un câble comportant des fibres optiques entourées par une gaine externe comportant une couche dans laquelle des organes de renfort allongés sont disposés selon deux groupes diamétralement opposés de plusieurs organes de renfort adjacents noyés dans ladite couche de la gaine externe à distance des surfaces de celle-ci, caractérisé en ce que chaque groupe consiste en deux organes de renfort tangents l'un à l'autre. On a ainsi un compromis optimum entre le nombre d'organes de renfort qui permet de minimiser l'épaisseur de la gaine externe et les contraintes auxquelles les organes de renfort sont soumis tout en permettant une flexion importante du câble.

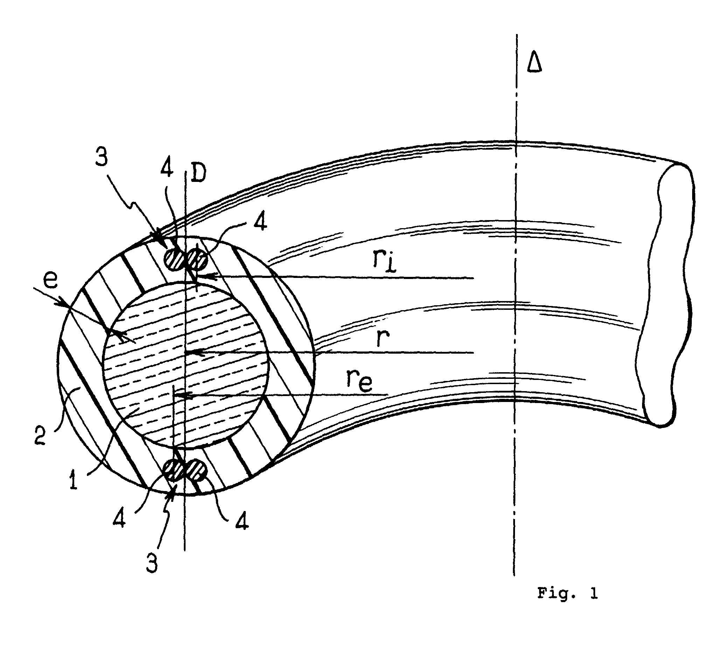

D'autres caractéristiques et avantages de l'invention apparaîtront à la lecture de la description qui suit d'un mode de réalisation particulier non limitatif de l'invention, en relation avec la figure unique ci-jointe qui est une vue en perspective de l'extrémité d'un câble selon l'invention en position recourbée.

En référence à la figure le câble selon l'invention comporte un faisceau de fibres optiques 1 dont la structure n'a pas été détaillée mais qui peut par exemple être réalisée sous forme d'un ou plusieurs groupes de fibres optiques maintenues accolées les unes aux autres par des gaines de maintien comme décrit dans le document FR-A-2.665.266. Le faisceau de fibres optiques est entouré par une gaine externe 2 dans laquelle sont noyés deux groupes 3 d'organes de renfort 4. Les groupes 3 sont diamétralement opposés et comprennent chacun deux organes de renfort 4 tangents l'un à l'autre et disposés de part et d'autre d'une droite D passant par la fibre moyenne du faisceau de fibres optiques. Les organes de renfort sont réalisés dans des matériaux conventionnels tels que des fils métalliques ou des mèches de fibre de verre ou d'aramide rigidifiée par une résine ayant un haut module de traction et un faible coefficient de dilatation thermique.

On remarquera qu'en disposant dans chaque groupe deux organes de renfort côte à côte on obtient, pour un diamètre des organes de renfort divisé par 1,4 par rapport au diamètre que devraient avoir seulement deux organes de renfort diamétralement opposés, une section totale des organes de renfort égale à la section qui serait obtenue avec seulement deux organes de renfort diamétralement opposés. L'épaisseur de la gaine externe est donc diminuée dans des proportions notables par rapport à l'épaisseur d'une gaine externe dans laquelle seulement deux organes de renfort sont noyés.

Par ailleurs, si l'on désigne par r le rayon de courbure moyen du câble autour d'un axe $\Delta$ parallèle à la droite D, par $r_i$ le rayon de courbure moyen de l'organe de renfort 4 radialement interne par rapport à la droite

D et par $r_e$ le rayon de courbure moyen de l'organe de renfort radialement externe par rapport à la droite D, et si l'on considère des organes de renfort ayant un diamètre égal à la moitié de l'épaisseur de la gaine externe 2, on a :

$$r_i = r - \frac{e}{4}$$

$$r_e = r + \frac{e}{4}$$

d'où l'on déduit un allongement différentiel

$$\frac{r_e - r_1}{r} = \frac{e}{2r}$$

A titre d'exemple, pour r = 50 mm et e = 1,2 mm on obtient un allongement différentiel de 1,2 % seulement alors qu'il est généralement admis que l'allongement à la rupture est de l'ordre de 5 %.

En disposant des organes de renfort selon des groupes diamétralement opposés d'organes adjacents on n'augmente pas de façon indue les contraintes sur les organes de renfort diamétralement opposés tout en diminuant de façon sensible l'épaisseur de la gaine externe.

Bien entendu l'invention n'est pas limitée au mode de réalisation décrit et on peut y apporter des variantes de réalisation sans sortir du cadre de l'invention tel que défini par la revendication.

## Revendications

**1.** Câble comportant des fibres optiques (1) entourées par une gaine externe comportant une couche (2) dans laquelle des organes de renfort allongés (4) sont disposés selon deux groupes (3) diamétralement opposés de plusieurs organes de renfort (4) adjacents noyés dans ladite couche de la gaine externe à distance des surfaces de celle-ci, caractérisé en ce que chaque groupe (3) consiste en deux organes de renfort (4) tangents l'un à l'autre.

## Patentansprüche

**1.** Kabel mit optischen Fasern (1), die von einem äußeren Mantel umgeben sind, der eine Schicht (2) hat, in der längliche Verstärkungselemente (4) in zwei diametral entgegengesetzten Gruppen (3) von mehreren angrenzenden Verstärkungselementen (4) angeordnet sind, die in dieser Schicht des äußeren Mantels mit Abstand zu dessen Oberfläche eingebettet sind, dadurch **gekennzeichnet**, daß jede Gruppe (3) aus zwei einander berührenden Verstärkungselementen (4) besteht.

## Claims

**1.** A cable including optical fibers (1) enclosed in an outer sheath comprising a layer (2) in which elongate reinforcing members (4) are disposed in two diametrically opposite groups (3) each comprising a plurality of adjacent reinforcing members (4) embedded in said layer of the outer sheath and distant from surfaces thereof characterized in that each group consists in two reinforcing members tangent to each other.

Fig. 1